Europäisches Patentamt

European Patent Office

Office européen des brevets

(19)

(11) EP 1 113 675 A1

(12) EUROPEAN PATENT APPLICATION

(43) Date of publication:
04.07.2001 Bulletin 2001/27

(51) Int Cl.7: H04Q 1/46, H04M 3/00

(21) Application number: 00440001.6

(22) Date of filing: 03.01.2000

(84) Designated Contracting States:
AT BE CH CY DE DK ES FI FR GB GR IE IT LI LU
MC NL PT SE
Designated Extension States:
AL LT LV MK RO SI

(71) Applicant: ALCATEL
75008 Paris (FR)

(72) Inventor: Pinier, François
67100 Strasbourg (FR)

(74) Representative: Brose, Gerhard, Dipl.-Ing. et al
Alcatel
Intellectual Property Department
70430 Stuttgart (DE)

(54) **Robust CAS detection method**

(57)    In order to avoid problems of talk-off and talk-on errors during the detection of DTMF signals, in particular, of call alert signals, it is proposed to use the Welch method of overlapping Fourier transforms.

**Figure**

EP 1 113 675 A1

**Description**

The present invention relates to a method of detection of a predefined signaling signal sent via an analog telecommunications line as set forth in the preamble of claim 1, to a computer product comprising computer program code means, to a telecommunications device as set forth in the preamble of claim 7, and to a predefined signaling signal detector to be connected to an input coupled to an analog telecommunications line.

Telecommunications operators offering the service of alerting a user A engaged in a telecommunication with a user B that a caller C try to reach him, will see to it that a so called calling alerting signal CAS is sent to the user A. Such predefined signaling signal (CAS) is sent to the telecommunications device of the user A via public switched telephone network PSTN. In that case, a procedure containing the following steps must be executed by the local telephone exchange station or central office to which the telecommunications device of the user A is connected.

When a caller C dial the corresponding phone number of user A already engaged with user B, the station or office have to mute or cut off the telecommunications transmission from the engaged distant user B. It will then send to A a call signal (SAS, generally at 440 Hz) followed by the CAS (generally a dual tone multi frequency DTMF signal at $\nu_1$=2170 Hz and $\nu_2$=2750 Hz during some time interval e.g. 80 ms). The targeted telecommunications device from user A will have to detect this CAS. In case the detection was successful, it will then switch-on its sending path and send an acknowledgement signal (e.g. a "D" in DTMF) back to the station or office. Afterwards it will set back its modem (e.g. V23 or Bell 202) into receiving mode.

Upon reception of the acknowledgement signal, the station or office will be able, if supported by him, to transmit identification information (name, phone number, etc.) concerning the new caller C. This occurs then via identification signals like caller line identification on call waiting (CLICW, CLI of type 2). The received identification information by the telecommunications device of user A will be stored and/or shown there on a display.

Finally, the station suspends the cut off of the transmission from the engaged distant user B. The targeted telecommunications device from user A will have to switch off its sending path. The existing audio path is then restored and the telecommunication between user A and B can be carry on normally as before the interruption.

The main difficulty encountered while providing this service is the reliability of the detection of any CAS by the targeted telecommunications device. This is a major task since a CAS has to be detected while speech may be present, i.e. while voice signals are exchanged via PSTN between the two already engaged users (here A and B). Indeed, speech can cause non detection of really existing CAS, but can also generate false detection, i.e. positive detection of non existing CAS.

Now, as the targeted telecommunications device has to switch off its sending path, therefore to switch on its receiving one (modem set into receiving mode) as soon as it is assumed to have detected a CAS, false detection will have of course dramatic effects, by muting the conversation for seconds. In order to verify the false detection rate of telecommunications devices, so-called "talk-off" and "talk-down" testing have been specified (see BELLCORE: GR30 core, SR-TSV-002476 and SR-3004). There, high demanding criteria have been proposed as to reliability of CAS detection in order to keep false detection rates under bearable threshold values. Indeed the detection must still work for a signal to speech ratio exceeding even -21dB till to -23dB.

A "talk-off" error occurs when the telecommunications device detected a CAS while the office or station did not sent one. This happens when the speech signal produced by the near end speaker (user A) or far end speaker (user B) contains a signal (sound) of a similar structure then a CAS. On the other hand a "talk-down" error arises when the office or station has actually sent a CAS towards a targeted telecommunications device but this one could not detected it. The reason may be multiple like that the CAS has been masked, distorted, modified by or did interfered with mainly the speech signal of the near end user A. The disturbing influence of the speech signal produced by the near end user A on CAS detection is due to the attendant facts that, on the one hand, CAS detection is performed on signals transiting in the receiving path, and on the other hand, at least a limited coupling always exists between sending path and receiving path. This leads to injection of speech signals produced by the near end user A which is transmitted from the sending path into the receiving path.

It is known to implement telecommunications devices with predefined signaling signal detectors made of band pass filters like Goertzel or narrow one. Both filters work after an immediate impulse response IIR method, applying a specific frequency window centered at the frequencies of the predefined signaling signal. In the case of a CAS as predefined signaling signal, two windows centered at $\nu_1$, and $\nu_2$ will be used. An absolute energy is then computed out of the signal in these windows and comparison is performed between that value and an extrapolated absolute energy for the estimated noise.

Such kind of filters do not perform a really accurate estimation of the noise. Accordingly, the resolution achieved with these filters is particularly poor if a noise of more than -18dB is superposed to e.g. a CAS as predefined signaling signal, ending with quite often talk-off and talk-down errors, a not satisfactory result in view of the high demanding criteria cited above.

An object of the invention is to ensure that neither talk-off nor talk-down errors occur even when noise comes to exceed -18dB by proposing a method of detection of predefined signaling signals much more robust against among others superimposed speech of the near end user, and a telecommunications device with such method implemented in it.

This object is attained, according to the invention, by a method of detection of predefined signaling signal as claimed in claim 1 and a computer product, a telecommunications device and a predefined signaling signal detector as claimed in claim 6, 7 and 15 respectively.

It is taken advantage of the improvement made on nowadays processors used for telecommunications device permitting to perform more operations in less time. Further the present invention is a remarkable application of the Welch algorithm developed in the field of spectral estimation. The Welch algorithm is applied in the present invention for the analyze of predefined signaling signals sent via analog telecommunications line, in particular for the detection of specific signals like a CAS.

The method according to the invention comprises the following steps of:

- applying a Fourier transform FT of said analog telecommunications signals over successive finite time intervals characterized in that at least one of said time intervals overlaps over at least a part of the next one; There a fast FT (FFT) procedure is usually used. Furthermore, the present method comprises the supplementary steps of
- averaging of said FT over a certain number of said finite time intervals, giving an averaged spectral function;
- analyzing said averaged spectral function for the detection of the possible presence of said predefined signaling signal.

An embodiment of the method of detection of predefined signaling signal according to the present invention is characterized in that each successive time interval, during which a Fourier transform FFT of analog telecommunications signal is performed, overlaps over at least a part of the next one. This is among other possible because the analog telecommunications signals before being Fourier transformed is digitized. It is then reproduced by a discrete set of samples. The said overlap can be obtained by the multiple use of few of these samples. In that way an advantageous increase of the resolution of the detection of a possible presence from a predefined signaling signal is achieved.

Another embodiment of the present method is characterized in that it is specially applied to detect CAS. The resolution achieved with such method makes it ideally suited for the detection of CAS, a typical DTMF signal as explained in the preamble of the present invention.

tion. The average of the different FT over a certain number of said finite time intervals to obtain an averaged spectral function ensures a correct differentiation between noise like speech and the real predefined signaling signal, in this case a CAS.

The present method can advantageously be used also for the detection of any kind of predefined signaling signals sent over analog telecommunications signals. For example, it can be used to detect any DTMF signals as well as R1- and R2-signal (state period for a run time object respectively 'not available' and 'processing') and also deactivation signals of an echo suppressor.

The above introduced method according to the invention can be entirely conceived as a computer product i.e. a software. Each step is then reproduced by computer program code means building up a or several programs (computer product) which are running on a processor of a predefined signaling signal detector. The possibility to let performed the claimed method by a computer product permits to set up already used telecommunications device containing a modem or half-modem and a processor with such computer product. This could even be done via the analog telecommunications line as well as further updates (remote updates).

The present invention relates further to a telecommunications device comprising

- an input coupled to an analog telephone line for receiving analog telecommunications signals,
- a predefined signaling signal detector working according to the method claimed above. It is therefore connected to said input to detect a predefined signaling signal sent via analog telecommunications line and characterized in that said predefined signaling signal detector contains
- means to apply a Fourier transform FT over said analog telecommunications signal on successively overlapping time interval. Here also a FFT procedure may be advantageously used.
- Furthermore the detector contains means to average said FT over several time intervals, obtaining an averaged spectral function,
- and means to analyze said averaged spectral function for the detection of the possible presence of the said predefined signaling signal.

An embodiment of the telecommunications device according to the invention is characterized in that said time interval is defined by a window for the considered values of the amplitude of said analog telecommunications signal i.e. of the obtained samples. In that way, only values (samples) of relevance i.e. values in the neighborhood of the characteristic frequencies where a predefined signaling signal shall be found, will be treated in the present invention. This optimizes the use of the central processing unit CPU.

A further embodiment is characterized in that the said means to process said averaged spectral function is the processor of the telecommunications device. Furthermore, such processor can be set up in such a way, that it will perform a comparison between the amplitude of said averaged spectral functions at the frequency range where the predefined signaling signal which shall be detected like e.g. the CAS is defined and outside of that range. Latter value taken out of the averaged spectral function will correspond to the amplitude of the noise.

The present invention concerns also a predefined signaling signal detector which is independent of the analog telecommunications device to which it is affected. Said predefined signaling signal detector is therefore connected to an input coupled to an analog telephone line for receiving analog telecommunications signals. It contains means to detect, according to the method already claimed above, predefined signaling signals sent via said analog telecommunications line. It contains a modem or half-modem and at least a processor performing the necessary steps of that method. Such detector could be advantageously used for analog telecommunications devices which neither have a modem or half-modem nor a processor updateable with the computer product according to the invention.

Further advantageous features of the invention are defined in the dependent claims and will become apparent from the following description and the drawing.

One embodiment of the invention will now be explained in more detail with reference to the accompanying drawing, in which:

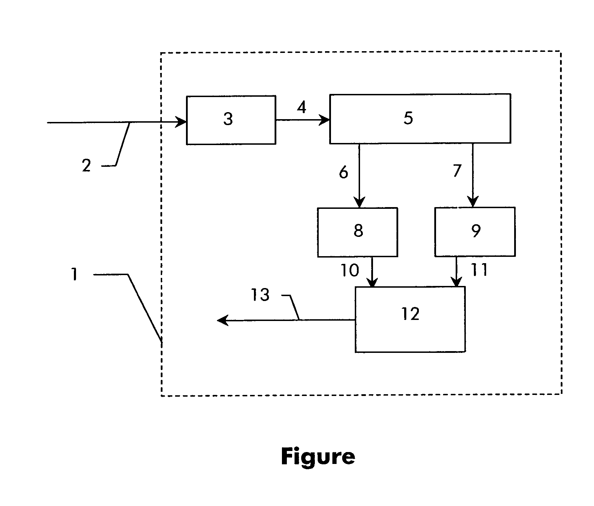

Figure 1 is a schematic of parts of the telecommunications device related to the detection of predefined signaling signal according to the invention.

The telecommunications device according to the invention as disclosed in figure 1 comprises a predefined signaling signal detector 1. This detector 1 is connected to an input 2 to receive analog telecommunications signals sent by the PSTN. Any of these signals will be converted by a modem or half-modem 3 (digital/ analog converter - codec) and then transferred to an estimator 5.

It is this estimator 5 which will treat any telecommunications signals received from the modem 3 after the Welch-algorithm (see "Statistical digital signal processing and modeling" from Monson H. Hayes, edited by John Wiley & sons - ISBN 0 471 59431 8 in 1996). The estimator 5 will process an averaged spectral function and forwarded it 6, 7, to means 8, 9, which will extract out of it respectively a value for the amplitude at the frequency of the expected signaling signal as well as an average value for the noise in that range. Former and latter will be transferred respectively 10, and 11 to a mean 12 like a controller which will apply a comparison between both values. There also will be taken a decision if a predefined signaling signal was detected in dependence of the result of that comparison. In the positive case of the detection of a predefined signaling signal like a CAS, a validation 13 will be sent by the detector 1 of the targeted telecommunications device.

After the analog telecommunications signals sent via the analog telecommunications line were digitized by the modem 3, the present predefined signaling signal detector 1 will apply, on the correspondingly obtained samples, a specific method of detection of predefined signaling signals. It comprises the steps of:

- applying a Fourier transform FT (usually a fast FT -FFT) of these samples over successive finite time intervals characterized in that at least some of said time intervals overlap usually only partially (about few samples) over the next one; and the supplementary steps of
- averaging of said FT over a certain number of said finite time intervals, giving an averaged spectral function $\bar{F}$;
- analyzing said averaged spectral function $\bar{F}$ for the detection of the possible presence of said predefined signaling signal over said analog telecommunications signal.

The FT as well as the averaging of said FT to obtain the averaged spectral function $\bar{F}$ are performed by the estimator 5. There is applied a calculation based on a non parametric method for spectral estimation called in general the Welch method or averaging modified periodograms (see above ref. from Monson H. Hayes). The estimator obtains in that way a frequency estimation of the digitized analog telecommunications signal. The digitalization of that method for the present purpose uses fast FT procedure to optimize the use of CPU.

To obtain a single periodogram, the estimator 5 will analyze a set of values of the analog telecommunications signal e.g. 256 samples, passing a window of specific shape like a rectangular or Blackman window. The window defines a specific time interval e.g. 32 ms of call rate. Thus the estimator 5 will calculate permanently successive periodogram but the so defined time interval showing some overlap which can be equal or even more than a quarter of the duration of that specific time interval itself. For example the overlap can be of 8 ms of call rate i.e. corresponding to 64 samples. An averaged spectral function $\bar{F}$ will be obtained by averaging over several successive overlapping periodograms e.g. 7 successive ones of same size (256 samples) and with the same overlapping (64 samples) defining consequently a total time interval of 80 ms of call rate. This time interval is typically of same duration as the time interval during which a predefined signaling signal like a CAS will be sent over the analog telecommunications signal.

The estimator 5 applies the previous procedure for the calculation of an averaged spectral function $\bar{F}$ in a continuous way. Continuous means here that e. g. after each new calculated periodogram a new aver-

aged spectral function $\bar{F}$ is estimated using this new periodogram and e.g. the last 6 other ones.

After that, the estimator 5 will forwarded 6, 7, each averaged spectral function $\bar{F}$ to the means 8, 9. The former mean 8 will extract out of it its value at the frequencies where the predefined signaling signal, if present over the analog telecommunications signal, is expected. For a CAS, it will then be at $v_1$ and $v_2$ i.e. the mean 8 will extract the values $\bar{F}(v_1)$ and $\bar{F}(v_2)$. The latter mean 9 will compute a typical value for the noise $\bar{F}_{noise}$ at a frequency range in the neighborhood of the characteristic one for the predefined signaling signal (for a CAS at $v_1$, $v_2$). In both cases, the obtained values are transferred 10, 11, to the controller 12 which will subtract the value of the noise $\bar{F}_{noise}$ out of the values $\bar{F}(v_1)$ and $\bar{F}(v_2)$. In dependence of the result of that subtraction i. e. if this result exceeds or not a critical value, a decision will be taken that the detector 1 did detected or not a predefined signaling signal like a CAS.

In the case of a positive decision that a detection occurs, a validation will then be forwarded 13 by the detector 1 to the PSTN. The targeted telecommunications device containing that detector 1 will switch off its sending path, and therefore switch on its receiving one (modem set into receiving mode). This will mute the conversation for seconds. In that time, it will be ready to receive any information about the caller C which try to reach this analog telecommunications device of user A already in a off-hook mode-user A is engaged in a telecommunications which the user B. The transfer of that information occurs usually as identification signals like caller line identification on call waiting (CLICW, CLI of type 2).

It can be possible to conceive a predefined signaling signal detector 1 for a telecommunications device such that the estimator 5, the means 8, 9 and the controller 12 are all included in a processor. This processor could be the one already present in that telecommunications device. The different steps of the present method of a detection of a predefined signaling signal according to the invention will then be performed by different steps inside a software program included in this processor. Thus, it could be possible to set up old analog telecommunications device containing already a modem or half-modem and a processor, with this software for detection of predefined signaling signal.

Alternatively, the predefined signaling signal detector 1 can be conceived in such a way to be a separate device. It must then be connected to the analog telecommunications device to which it is affected. In that way, the service of detection of predefined signaling signal like CAS could also be offered to users of plain old telephone.

In general, it is in the scope of the present invention that the claimed method of detection can entirely be performed by a computer product i.e. a software. This has the great advantage that any later update could also be done in a remote way via the analog telecommunications line.

The present method of detection of predefined signaling signal like a CAS and a telecommunications device containing a detector 1 working after that present method will achieve a never reach resolution thanks to the Welch algorithm used. Indeed the overlap of the time interval during which a periodogram and the average over several periodogram to get the averaged spectral function of the analog telecommunications signal ensure a very high differentiation between any noise (speech) and a predefined signaling signal. It will therefore be able almost to avoid completely talk off and talk on errors.

## Claims

1. Method of detection of a predefined signaling signal sent via an analog telecommunications line, comprising the step of:

   - applying a Fourier transform FT over successive finite time intervals of analog telecommunications signals sent via said analog telecommunications line
   **characterized in**
   that at least one of said time interval overlaps over at least a part of the next one;
   and comprising the supplementary steps of
   - averaging of said FT over a certain number of said finite time intervals, giving an averaged spectral function;
   - analyzing said averaged spectral function for the detection of the possible presence of said predefined signaling signal.

2. Method of detection of a predefined signaling signal according to claim 1, characterized in that each time interval overlaps over at least a part of the next one.

3. Method of detection of a predefined signaling signal according to claim 1, characterized in that the at least partial overlaps between the time intervals are of same duration.

4. Method of detection of a predefined signaling signal according to claim 1, characterized in that the at least partial overlaps can be at least equal to a quarter of the duration of said time interval itself.

5. Method of detection of a predefined signaling signal according to claim 1, characterized in that said method is adapted to detect the said predefined signaling signal as calling alerting signals CAS.

6. A computer product comprising computer program code means adapted to perform all the steps of claim 1 when said computer product is run on a processor of a predefined signaling signal detector (1).

7.  Telecommunications device comprising

    • an input (2) coupled to an analog telephone line for receiving analog telecommunications signals,
    • a predefined signaling signal detector (1) connected to said input to detect a predefined signaling signal sent via said analog telecommunications line
    **characterized in that**
    said predefined signaling signal detector (1) contains
    • means (5) to apply a Fourier transform FT over said analog telecommunications signals on successive time intervals while at least one of said time interval overlaps at least partially over the next one, said means (5) averaging said FT over several time intervals, obtaining an averaged spectral function,
    • and means (8, 9, 12) to analyze said averaged spectral function for the detection of the possible presence of the said predefined signaling signal.

8.  Telecommunications device according to claim 7, characterized in that said means (5) while applying the said FT uses a function of specific form defining a window for the considered values of the amplitude of said analog telecommunications signals.

9.  Telecommunications device according to claim 8, characterized in that said window has a rectangular shape.

10. Telecommunications device according to claim 8, characterized in that said window is a Blackman window.

11. Telecommunications device according to claim 7, characterized in that at least one of said means (8, 9, 12) which analyze said averaged spectral function, applies a comparison procedure between the amplitude of said averaged spectral function at the frequency range where said predefined signaling signal shall be expected and a typical value for the noise won out of said averaged spectral function.

12. Telecommunications device according to claim 7, characterized in that at least part of the means (5, 8, 9, 12) for the analyzing of said analog telecommunications signals to detect the possible presence of said predefined signaling signal are comprised into a processor of the said predefined signaling signal detector (1).

13. Telecommunications device according to claim 12, characterized in that it contains a computer readable medium having a program recorded thereon, said computer readable medium comprising computer program code means adapted to perform at least parts of the steps of claim 1 when said program is run on said processor.

14. Telecommunications device according to claim 7, characterized in that said predefined signaling signal detector (1) is a calling alerting signal CAS detector.

15. Predefined signaling signal detector (1) to be connected to an input (2) coupled to an analog telecommunications line for receiving analog telecommunications signals, to detect a predefined signaling signal sent via said analog telecommunications line, while said predefined signaling signal detector (1) is composed of means as set forth in claim 7.

**Figure**

European Patent Office

**EUROPEAN SEARCH REPORT**

Application Number

EP 00 44 0001

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 570 097 A (AT&T) 18 November 1993 (1993-11-18) * column 1, line 15 - line 35 * * column 3, line 26 - line 36 * * column 3, line 48 - line 53 * | 1-15 | H04Q1/46 H04M3/00 |
| X | EP 0 213 651 A (PHILIPS) 11 March 1987 (1987-03-11) * page 6, line 12 - line 22 * | 1-15 | |
| X | US 5 974 138 A (SAMBHWANI, SHAW) 26 October 1999 (1999-10-26) * column 1, line 52 - line 59 * * column 2, line 48 - line 53 * * column 6, line 13 - line 20 * | 1-15 | |
| X | EP 0 550 144 A (AT&T) 7 July 1993 (1993-07-07) * page 2, line 52 - line 57 * * page 3, line 3 - line 8 * * page 5, line 32 - line 36 * * page 8, line 19 - line 49 * * page 9, line 7 - line 9 * | 1-15 | TECHNICAL FIELDS SEARCHED (Int.Cl.7) H04Q H04M |
| A | HANRAHAN H E: "Estimation of amplitudes, frequencies and phases of multitone signal components using low sidelobe time windows" IEEE SOUTH AFRICAN SYMPOSIUM ON COMMUNICATIONS AND SIGNAL PROCESSING , pages 19-24, XP002141887 New York, US ISBN: 0-7803-1292-9 * abstract * | 10 | H04L |

-/--

The present search report has been drawn up for all claims

| Place of search | Date of completion of the search | Examiner |
|---|---|---|
| THE HAGUE | 5 July 2000 | Scriven, P |

EPO FORM 1503 03.82 (P04C01)

European Patent
Office

**EUROPEAN SEARCH REPORT**

Application Number

EP 00 44 0001

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | US 6 046 977 A (BARTKOWIAK) 4 April 2000 (2000-04-04) * column 1, line 22 - line 30 * * column 1, line 55 - line 67 * * column 2, line 14 - line 19 * ----- | 1-15 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 5 July 2000 | Scriven, P |

EPO FORM 1503 03.82 (P04C01)

**ANNEX TO THE EUROPEAN SEARCH REPORT
ON EUROPEAN PATENT APPLICATION NO.** EP 00 44 0001

This annex lists the patent family members relating to the patent documents cited in the above–mentioned European search report.
The members are as contained in the European Patent Office EDP file on
The European Patent Office is in no way liable for these particulars which are merely given for the purpose of information.

05–07–2000

| Patent document cited in search report | | Publication date | Patent family member(s) | | Publication date |
|---|---|---|---|---|---|
| EP 0570097 | A | 18–11–1993 | US | 5325427 A | 28–06–1994 |
| | | | CA | 2089593 A,C | 24–09–1993 |
| | | | JP | 6022349 A | 28–01–1994 |
| EP 0213651 | A | 11–03–1987 | NL | 8502008 A | 02–02–1987 |
| | | | DE | 3678881 D | 29–05–1991 |
| | | | JP | 62038097 A | 19–02–1987 |
| | | | US | 4742534 A | 03–05–1988 |
| US 5974138 | A | 26–10–1999 | NONE | | |
| EP 0550144 | A | 07–07–1993 | US | 5442696 A | 15–08–1995 |
| | | | AU | 643632 B | 18–11–1993 |
| | | | AU | 3006192 A | 08–07–1993 |
| | | | CA | 2081535 A,C | 01–07–1993 |
| | | | JP | 6086338 A | 25–03–1994 |
| US 6046977 | A | 04–04–2000 | NONE | | |

EPO FORM P0459

For more details about this annex : see Official Journal of the European Patent Office, No. 12/82